# EUROPEAN PATENT SPECIFICATION

(11) **EP 4 249 444 B1**
(45) Date of publication and mention of the grant of the patent: **05.03.2025**
(21) Application number: 23163077.3
(22) Date of filing: 21.03.2023
(51) Int. Cl.: C03C 3/064, C03C 8/06, C03C 8/08, C03C 8/14, C03C 8/20

(54) **ENAMEL COMPOSITION ENSURING EXCELLENT THERMAL SHOCK RESISTANCE, PREPARATION METHOD THEREOF AND COOKING APPLIANCE**
EMAILZUSAMMENSETZUNG ZUR SICHERSTELLUNG VON HERVORRAGENDER WÄRMESCHOCKBESTÄNDIGKEIT, HERSTELLUNGSVERFAHREN DAFÜR UND KOCHGERÄT
COMPOSITION D'ÉMAIL ASSURANT UNE EXCELLENTE RÉSISTANCE AUX CHOCS THERMIQUES, SON PROCÉDÉ DE PRÉPARATION ET APPAREIL DE CUISSON

(30) Priority: 22.03.2022 KR 20220035310
(43) Date of publication of application: 27.09.2023
(73) Proprietor: LG Electronics Inc., Yeongdeungpo-gu Seoul, 07336 (KR)
(72) Inventor: KIM, Ju Hyeong, 08592 Seoul (KR); YANG, Jaekyung, 08592 Seoul (KR); KIM, Taehee, 08592 Seoul (KR); SHIN, Jaeyoung, 08592 Seoul (KR); LEE, Youngsoo, 08592 Seoul (KR)
(74) Representative: Vossius & Partner Patentanwälte Rechtsanwälte mbB

(56) References cited:
- EP-A1- 2 662 340
- EP-A1- 3 421 436
- EP-A1- 3 851 419
- KR-A- 20140 115 562

## Description

### TECHNICAL FIELD

Disclosed herein are an enamel composition ensuring an excellent cleaning function and excellent thermal shock resistance, a preparation method thereof and a cooking appliance.

### BACKGROUND

Enamel is a substance where a glass glaze is applied onto the surface of a metal plate. Ordinary enamel is used for a cooking appliance such as a microwave oven and an oven, and the like. The patent application EP 3 421 436 A1 describes an enamel composition for cooking appliances. Cooking appliances such as an electric oven, a gas oven and the like are devices that cook food using a heat source. Contaminants and the like, produced during cooking, are attached to the inner wall of the cavity of a cooking appliance. Accordingly, the inner wall of the cavity needs to be cleaned. Enamel is coated on the inner wall surface of the cavity of a cooking appliance, and the like, and helps to remove contaminants attached to the cooking appliance easily. Among the technologies for readily cleaning the inner wall of a cavity, the process of pyrolysis (thermal decomposition) by which contaminants are burned to ashes at high temperatures is widely known. The process of pyrolysis (thermal decomposition) can be applied to enamel compositions including components such as P₂O₅, SiO₂, B₂O₃ and the like.

The pyrolysis (thermal decomposition) process described above is performed at 450 to 500 °C. However, while temperature drops from high temperature to room temperature, residual stress occurs due to a difference between the coefficient of thermal expansion of a base material and the coefficient of thermal expansion of enamel, and the residual stress causes defects such as chipping on the surface of the enamel.

### SUMMARY

### Technical Problems

The objective of the present disclosure is to provide a novel enamel composition ensuring an excellent cleaning function and excellent thermal shock resistance.

The objective of the present disclosure is to provide a novel enamel composition causing no defects such as chipping although the enamel composition is used at high temperature, for pyrolysis of contaminants.

The objective of the present disclosure is to provide a preparation method of an enamel composition ensuring the cleaning function and thermal shock resistance described above.

Aspects according to the present disclosure are not limited to the above ones, and other aspects and advantages that are not mentioned above can be clearly understood from the following description and can be more clearly understood from the embodiments set forth herein. Additionally, understandably, the aspects and advantages in the present disclosure are embodied via means and combinations thereof that are described in the appended claims.

### Technical Solutions

To provide an enamel composition ensuring an excellent cleaning function and excellent thermal shock resistance, an enamel composition according to the present disclosure comprises a glass frit, a siloxane-based compound, a silane-based compound, and mill addition.

The enamel composition according to the present disclosure as defined in the annexed claims comprises mill addition comprising one or more that is selected from a group comprised of SiO₂, Al₂O₃, ZiO₂ and TiO₂. The enamel composition comprises 85 to 99.75 wt% of the glass frit, 0.1 to 2.5 wt% of the siloxane-based compound, 0.05 to 2.5 wt% of the silane-based compound, and 0.1 to 10 wt% of the mill addition.

Additionally, the mill addition may have a particle size of 50 to 100 µm, preferably.

### Advantageous Effects

An enamel composition according to the present disclosure ensures an excellent thermal shock resistance as well as an excellent cleaning function.

The enamel composition causes no defects such as chipping although the enamel composition is used at high temperature, for pyrolysis of contaminants.

The enamel composition helps to increase the lifespan of enamel by suppressing defects of the enamel. The enamel composition helps to remove defects readily without increasing costs, since a raw material for glass frits is used as mill addition.

A novel preparation method of an enamel composition ensuring an excellent cleaning function and excellent thermal shock resistance according to the present disclosure is provided.

Specific effects are described along with the above-described effects in the section of detailed description.

### BRIEF DESCRIPTION OF DRAWINGS

The accompanying drawings constitute a part of the specification, illustrate one or more embodiments in the disclosure, and together with the specification, explain the disclosure, wherein:
FIG. 1 is a front view showing a cooking appliance in embodiments;
FIG. 2 is a picture showing that the surface of enamel is chipped; and
FIG. 3 is a picture showing results of a thermal shock resistance test in embodiments and comparative examples.

### DETAILED DESCRIPTION

### <Enamel composition>

An enamel composition according to the present disclosure comprises a glass frit, a siloxane-based compound, a silane-based compound and mill addition comprising one or more that is selected from a group comprised of SiO₂, Al₂O₃, ZrO₂ and TiO₂.

The enamel composition according to the present disclosure comprises a glass frit.

The glass frit comprises 13.5 to 17 wt% of P₂O₃, 30.3 to 37.6 wt% of SiO₂, 3.8 to13 wt% of Al₂O₃, 0.8 to 4.1 wt% of ZrO₂, 7.8 to 14.5 wt% of Na₂O, 2.3 to 4.5 wt% of K₂O, 0.4 to 1.6 wt% of Li₂O, 14.1 to 19.6 wt% of B₂O₃, 0.1 to 0.6 wt% of TiO₂, 1.8 to 6.9 wt% of NaF, 0.8 to 1.2 wt% of CoO, 0.1 to 0.6 wt% of MnO₂, 0.3 to 1.4 wt% of NiO, 0.1 to 4.3 wt% of Fe₂O₃, and 0.5 to 7.5 wt% of one or more of CaO and MgO, with respect to 100 wt% of the glass frit, to improve the chemical resistance, thermal properties and exterior features of enamel.

The enamel composition according to the present disclosure comprises a siloxane-based compound, and a silane-based compound. The siloxane-based compound and the silane-based compound are added to improve the functionality of the enamel composition. The siloxane-based compound and the silane-based compound help to improve dispersion properties at a time when the enamel composition is coated and to improve the mechanical properties of an enamel coating layer that is formed based on the enamel composition.

Preferably, the siloxane-based compound may comprise polymethylhydrosiloxane or polydimethylsiloxane.

The silane-based compound may comprise an amino silane-based compound, and for example, a compound such as amino propyl trimethoxy silane may be used as the silane-based compound.

The enamel composition according to the present disclosure comprises mill addition comprising one or more that is selected from a group comprised of SiO₂, Al₂O₃, ZrO₂ and TiO₂, to prevent defects such as chipping from being formed on the surface of enamel.

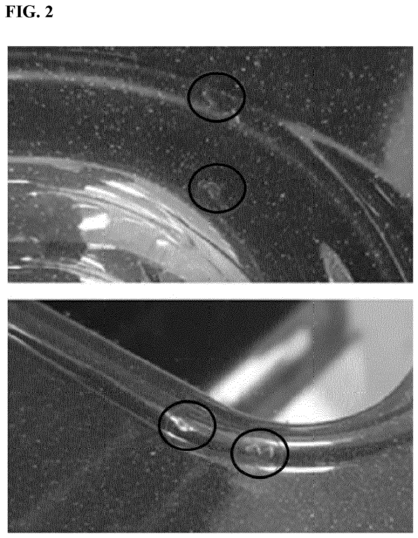

As described above, while temperature drops from high temperature to room temperature, residual stress occurs due to a difference between the coefficient of thermal expansion of a base material and the coefficient of thermal expansion of enamel, and the residual stress may cause defects such as chipping on the surface of the enamel. Referring to FIG. 2, it is often found that the machining model part or edge part of the cavity and door frame of an oven is chipped.

The enamel composition according to the present disclosure may suppress the occurrence of defects such as chipping since the mill addition is added to the enamel composition.

While an enamel coating using the enamel composition is burned, gas such as N₂, CO₂, CO, H₂ and the like is released from the base material, and is trapped in the enamel coating and forms a bubble structure.

The bubble structure is affected by the viscosity of enamel, and ordinarily, in a big-sized bubble, a crack may be caused easily by an impact and stress.

In the case where mill addition comprising one or more that is selected from a group comprised of SiO₂, Al₂O₃, ZrO₂ and TiO₂ is added to an enamel composition, the addition of mill addition to the enamel composition affects the viscosity of enamel, thereby making it possible to control the bubble structure.

Preferably, the mill addition has a particle size of 50 to 100 µm, thereby making it easy to control the bubble structure that is formed because of the generation of gas.

Additionally, the enamel composition according to the present disclosure comprises 85 to 99.75 wt% of the glass frit, 0.1 to 2.5 wt% of the siloxane-based compound, 0.05 to 2.5 wt% of the silane-based compound, and 0.1 to 10 wt% of the mill addition. Since the enamel composition according to the present disclosure has the above content range, the bubble structure formed based on the generation of gas may be easily controlled.

The enamel composition according to the present disclosure comprises the glass frit, the siloxane-based compound, the silane-based compound, and the mill addition, as described above, to suppress defects such as chipping formed on the surface of enamel.

### < Preparation method of enamel composition>

The preparation method of an enamel composition according to the present disclosure as defined in the annexed claims comprises preparing and melting a glass frit material, cooling the material and preparing a glass frit, adding mill addition comprising one or more that is selected from a group comprised of SiO₂, Al₂O₃, ZrO₂ and TiO₂, a siloxane-based compound and a silane-based compound to the glass frits and preparing a mixture, and stirring and grinding the mixture.

After the glass frit material is sufficiently mixed, a material for the enamel composition is melted. Preferably, the material for the composition may be melted with a temperature range of 1200 to 1500 °C. Additionally, the material for the composition may be melted for 1 to 2 hours.

Then the melted composition may be rapidly cooled by a quenching roller, with a chiller and the like. Accordingly, the glass frit may be prepared.

Then the mill addition comprising one or more that is selected form a group comprised of SiO₂, Al₂O₃, ZrO₂ and TiO₂, the siloxane-based compound and the silane-based compound are added to the glass frits, to prepare a mixture.

Herein, particles having a particle size of 50 to 100 µm may be used as the mill addition. Additionally, the siloxane-based compound may comprise polymethylhydrosiloxane or polydimethylsiloxane. Further, the silane-based compound may comprise an amino silane-based compound, and for example, a compound such as amino propyl trimethoxy silane may be used as the silane-based compound. After the preparation of the mixture, the mixture is stirred and ground, to prepare an enamel composition. The grinding step may be carried out based on the ball milling method, and the grinding process may be performed for about 4 to 6 hours.

After the stirring and grinding steps, the particle size of the enamel composition may be adjusted to about 50 µm.

### <Cooking appliance>

Then the enamel composition according to the present disclosure may be coated on one surface of a target object, on which the composition is to be coated. The target object may be some or all of a metal plate, a glass plate, and a part of a cooking appliance. Preferably, the enamel composition according o the present disclosure may be coated on the exterior of a cooking appliance, which cannot be treated thermally.

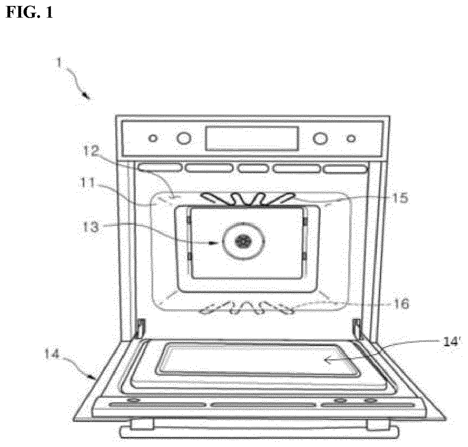

Referring to FIG. 1, a cooking appliance 1 according to the present disclosure comprises a cavity 11 having a cooking space, a door 14 selectively opening and closing the cooking space, at least one heat source 13, 15, 16 providing heat for heating a cooking target in the cooking space, and a coating layer that is formed by an enamel composition according to the present disclosure and coated on the inner surface of the cavity 11 or the door 14.

The cavity 11 may be formed into a cuboid having an open front surface. The heat source 13,15,16 may comprise a convention assembly 13 allowing heated air to be discharged into the cavity 11, an upper heater 15 being disposed on the cavity 11, and a lower heater 16 being disposed under the cavity 11. The upper heater 15 and the lower heater 16 may be provided inside or outside the cavity 11. The heat source 13, 15, 16 may not necessarily include the convection assembly 13, the upper heater 15 and the lower heater 16. That is, the heat source 13,15,16 may comprise any one or more of the convection assembly13, the upper heater 15 and the lower heater 16.

The enamel composition according to the present disclosure may be coated on the inner surface of the cavity 11, the door 14 or the door glass 14' of the cooking appliance 1, based on the dry process or the wet process. The cavity 11 and the door 14 may be made of a metal plate, and the coating layer using the enamel composition according to the present disclosure may be directly coated on the metal plate, as a single layer.

Additionally, the enamel composition according to the present disclosure may be applied to a cooking appliance comprising a glass plate, and at least one of heat sources, which is disposed under the glass plate. The coating layer formed by a glass composition according to the present disclosure may be disposed on the glass plate.

Hereafter, detailed aspects according to the present disclosure are described based on embodiments.

### <Embodiments>

### < Preparation of glass composition>

A glass frit having composition ratios listed in table 1 hereafter was manufactured. A raw material for each component was sufficiently mixed for three hours in a V-mixer. Herein, NH₄H₂PO₄ was used as a raw material for P₂O₃. Na₂CO₃, K₂CO₃, and Li₂CO₃ were respectively used as a raw material for Na₂O, K₂O, and Li₂O. The remaining components are listed in table 1. The mixed materials were sufficiently melted for one and a half hours at 1300 °C and were rapidly cooled in a quenching roller. Then a glass frit was obtained.

**[Table 1]**

| Component | Ratio (wt%) |
|---|---|
| P2O5 | 14.5 |
| SiO2 | 33.3 |
| B2O3 | 18.2 |
| Na2O | 12.2 |
| K2O | 4.1 |
| Li2O | 0.8 |
| Al2O3 | 5.5 |
| ZrO2 | 2.1 |
| TiO2 | 0.3 |
| NaF | 4.3 |
| CaO | 1.3 |
| MgO | 1.3 |
| CoO | 0.9 |
| MnO2 | 0.1 |
| NiO | 0.3 |
| Fe2O3 | 0.8 |

Additives listed in table 2 hereafter were added to the glass frit obtained through the above steps to prepare a mixture, and the mixture was ground for about five hours with a grinder (ball mill) and then passed through a 325 mesh sieve (ASTM C285-88). Powders having passed through the mesh sieve had a particle size of about 45 µm or less, and were used as an enamel composition.

**[Table 2] (Unit: wt%)**

| Component | Comparative example | Embodiment 1 | Embodiment 2 | Embodiment 3 |
|---|---|---|---|---|
| Glass frit | 99.8 | 99.1 | 99.1 | 99.09 |
| Mill addition | 0 | SiO2 0.6 | SiO2 0.5 | SiO2 0.3 |
| | | Al203 0.1 | Al203 0.1 | Al203 0.1 |
| | | | ZrO2 0.1 | TiO2 0.3 |
| Polymethylhydrosiloxan e | 0.15 | 0.15 | 0.13 | 0.15 |
| Amino silane | 0.05 | 0.05 | 0.07 | 0.06 |

### < Preparation of enamel composition sample>

The enamel composition prepared as described above sprayed on a stainless steel plate of 200×200 mm and thickness of 1mm or less with an ordinary corona discharge gun. The voltage of the discharge gun was controlled under the conditions of 40 kV to 100 kV. The sample was burned for 300 to 450 seconds at about 850 °C.

### <Experimental example-thermal shock resistance>

The thermal shock resistance of the samples in the embodiments and comparative example was evaluated as described hereafter.

### 1) Thermal shock resistance test-rapid cooling resistance test (KS D 9403)

The samples were heated for 20 minutes in a thermostat of 230 °C and then taken out of the thermostat, and put into water of room temperature, to see if there is a line crack or a separation.

### 2) Thermal shock resistance test -harsh condition test

The samples were heated for 60 minutes in a thermostat of 400 °C and then taken out of the thermostat, and put into water of room temperature, to see if there is a separation.

**[Table 3]**

| Thermal shock resistance test | Comparative example | Embodiment 1 | Embodiment 2 | Embodiment 3 |
|---|---|---|---|---|
| Rapid cooling resistance test | No abnormality | No abnormality | No abnormality | No abnormality |
| Harsh condition test | Separation | No abnormality | No abnormality | No abnormality |

In the above table, the rapid cooling resistance test showed no abnormality of the embodiments and the comparative example. However, the harsh condition test showed that the enamel coating layer separated from the base material in the comparative example. The separation between the base material and the enamel coating layer might be caused by bubbles generated by gas that was produced from the base material because of high temperature.

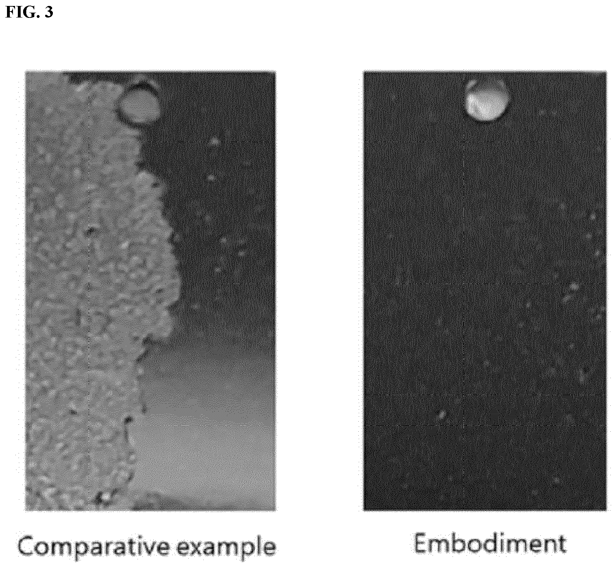

FIG. 3 shows a picture showing the surfaces of the comparative example and embodiment 1. Referring to FIG. 3, there is a separation on the surface of the comparative example, while there is no separation on the surface of embodiment 1.

### [Description of reference numerals]

1: Cooking appliance
11: Cavity
12: Cooking space
13: Convection assembly
14: Door
14': Door glass
16: Lower heater

## Claims

1. An enamel composition, comprising:
a glass frit;
a siloxane-based compound;
a silane-based compound; and
mill addition comprising one or more that is selected from a group comprised of SiO₂, Al₂O₃, ZrO₂ and TiO₂;
wherein the enamel composition comprises:
85 to 99.75 wt% of the glass frit;
0.1 to 2.5 wt% of the siloxane-based compound;
0.05 to 2.5 wt% of the silane-based compound; and
0.1 to 10 wt% of the mill addition; and
wherein the glass frit comprises:
13.5 to 17 wt% of P₂O₅;
30.3 to 37.6 wt% of SiO₂;
3.8 to 13 wt% of Al₂O₃;
0.8 to 4.1 wt% of ZrO₂;
7.8 to 14.5 wt% of Na₂O;
2.3 to 4.5 wt% of K₂O;
0.4 to 1.6 wt% of Li₂O;
14.1 to 19.6 wt% of B₂O₃;
0.1 to 0.6 wt% of TiO₂;
1.8 to 6.9 wt% of NaF;
0.8 to 1.2 wt% of CoO;
0.1 to 0.6 wt% of MnO₂;
0.3 to 1.4 wt% of NiO;
0.1 to 4.3 wt% of Fe₂O₃; and
0.5 to 7.5 wt% of one or more of CaO and MgO, with respect to 100 wt% of the glass frit.

2. The enamel composition of claim 1, wherein the mill addition has a particle size of 50 to 100 µm.

3. The enamel composition of claim 1 or 2, wherein the siloxane-based compound comprises polymethylhydrosiloxane or polydimethylsiloxane.

4. The enamel composition of any of claims 1 to 3, wherein the silane-based compound comprises amino silane.

5. A preparation method of an enamel composition, comprising:
preparing and melting a glass frit material;
cooling the material and preparing a glass frit;
adding mill addition comprising one or more that is selected from a group comprised of SiO₂, Al₂O₃, ZrO₂ and TiO₂, a siloxane-based compound, and a silane-based compound to the glass frit and preparing a mixture; and
stirring and grinding the mixture;
wherein the mixture comprises:
85 to 99.75 wt% of the glass frit;
0.1 to 2.5 wt% of the siloxane-based compound;
0.05 to 2.5 wt% of the silane-based compound; and
0.1 to 10 wt% of the mill addition; and
wherein the the glass frit material comprises:
13.5 to 17 wt% of P₂O₅;
30.3 to 37.6 wt% of SiO₂;
3.8 to 13 wt% of Al₂O₃;
0.8 to 4.1 wt% of ZrO₂;
7.8 to 14.5 wt% of Na₂O;
2.3 to 4.5 wt% of K₂O;
0.4 to 1.6 wt% of Li₂O;
14.1 to 19.6 wt% of B₂O₃;
0.1 to 0.6 wt% of TiO₂;
1.8 to 6.9 wt% of NaF;
0.8 to 1.2 wt% of CoO;
0.1 to 0.6 wt% of MnO₂;
0.3 to 1.4 wt% of NiO;
0.1 to 4.3 wt% of Fe₂O₃; and
0.5 to 7.5 wt% of one or more of CaO and MgO, with respect to 100 wt% of the glass frit.

6. The preparation method of claim 5, wherein the mill addition has a particle size of 50 to 100 µm.

7. The preparation method of claim 5 or 6, wherein the siloxane-based compound comprises polymethylhydrosiloxane or polydimethylsiloxane.

8. The preparation method of any of claims 5 to 7, wherein the silane-based compound comprises amino silane.

9. A cooking appliance, comprising:
a cavity having a cooking space;
a door selectively opening and closing the cooking space;
at least one heat source providing heat for heating a cooking target in the cooking space; and
a coating layer that is formed by an enamel composition of any of claims 1 to 4 and coated on one of an inner surface of the cavity, an inner surface of the door, and an inner surface of a door glass being disposed at the door.

10. A cooking appliance, comprising:
a glass plate;
at least one heat source being disposed under the glass plate; and
a coating layer being coated on an upper surface of the glass plate and formed by the enamel composition of any of claims 1 to 4.

## Patentansprüche

1. Eine Emaillezusammensetzung, umfassend:
eine Glasfritte;
eine Verbindung auf Siloxanbasis;
eine Verbindung auf Silanbasis; und
Mahlzusatz, umfassend einen oder mehrere ausgewählt aus einer Gruppe bestehend aus SiO₂, Al₂O₃, ZrO₂ und TiO₂;
wobei die Emaillezusammensetzung umfasst:
85 bis 99,75 Gew.-% der Glasfritte;
0,1 bis 2,5 Gew.-% der Verbindung auf Siloxanbasis;
0,05 bis 2,5 Gew.-% der Verbindung auf Silanbasis; und
0,1 bis 10 Gew.-% des Mahlzusatzes; und
wobei die Glasfritte umfasst:
13,5 bis 17 Gew.-% P₂O₅;
30,3 bis 37,6 Gew.-% SiO₂;
3,8 bis 13 Gew.-% Al₂O₃;
0,8 bis 4,1 Gew.-% ZrO₂;
7,8 bis 14,5 Gew.-% Na₂O;
2,3 bis 4,5 Gew.-% K₂O;
0,4 bis 1,6 Gew.-% Li₂O;
14,1 bis 19,6 Gew.-% B₂O₃;
0,1 bis 0,6 Gew.-% TiO₂;
1,8 bis 6,9 Gew.-% NaF;
0,8 bis 1,2 Gew.-% CoO;
0,1 bis 0,6 Gew.-% MnO₂;
0,3 bis 1,4 Gew.-% NiO;
0,1 bis 4,3 Gew.-% Fe₂O₃; und
0,5 bis 7,5 Gew.-% von einem oder mehreren von CaO und MgO, bezogen auf 100 Gew.-% der Glasfritte.

2. Die Emaillezusammensetzung nach Anspruch 1, wobei der Mahlzusatz eine Teilchengröße von 50 bis 100 µm aufweist.

3. Die Emaillezusammensetzung nach Anspruch 1 oder 2, wobei die Verbindung auf Siloxanbasis Polymethylhydrosiloxan oder Polydimethylsiloxan umfasst.

4. Die Emaillezusammensetzung nach einem der Ansprüche 1 bis 3, wobei die Verbindung auf Silanbasis Aminosilan umfasst.

5. Ein Herstellungsverfahren für eine Emaillezusammensetzung, umfassend:
Herstellen und Schmelzen eines Glasfrittenmaterials;
Abkühlen des Materials und Herstellen einer Glasfritte;
Zugabe von Mahlzusatz, der eines oder mehrere umfasst, ausgewählt aus einer Gruppe bestehend aus SiO₂, Al₂O₃, ZrO₂ und TiO₂, einer Verbindung auf Siloxanbasis und einer Verbindung auf Silanbasis zu der Glasfritte und Herstellen eines Gemisches; und
Rühren und Mahlen des Gemisches;
wobei das Gemisch umfasst:
85 bis 99,75 Gew.-% der Glasfritte;
0,1 bis 2,5 Gew.-% der Verbindung auf Siloxanbasis;
0,05 bis 2,5 Gew.-% der Verbindung auf Silanbasis; und
0,1 bis 10 Gew.-% des Mahlzusatzes; und
wobei das Material der Glasfritte umfasst:
13,5 bis 17 Gew.-% P₂O₅;
30,3 bis 37,6 Gew.-% SiO₂;
3,8 bis 13 Gew.-% Al₂O₃;
0,8 bis 4,1 Gew.-% von ZrO₂;
7,8 bis 14,5 Gew.-% Na₂O;
2,3 bis 4,5 Gew.-% K₂O;
0,4 bis 1,6 Gew.-% Li₂O;
14,1 bis 19,6 Gew.-% B₂O₃;
0,1 bis 0,6 Gew.-% TiO₂;
1,8 bis 6,9 Gew.-% NaF;
0,8 bis 1,2 Gew.-% CoO;
0,1 bis 0,6 Gew.-% MnO₂;
0,3 bis 1,4 Gew.-% NiO;
0,1 bis 4,3 Gew.-% Fe₂O₃; und
0,5 bis 7,5 Gew.-% von einem oder mehreren von CaO und MgO, bezogen auf 100 Gew.-% der Glasfritte.

6. Das Herstellungsverfahren nach Anspruch 5, wobei der Mahlzusatz eine Partikelgröße von 50 bis 100 µm aufweist.

7. Das Herstellungsverfahren nach Anspruch 5 oder 6, wobei die Verbindung auf Siloxanbasis Polymethylhydrosiloxan oder Polydimethylsiloxan umfasst.

8. Das Herstellungsverfahren nach einem der Ansprüche 5 bis 7, wobei die Verbindung auf Silanbasis Aminosilan umfasst.

9. Ein Kochgerät, umfassend:
einen Hohlraum mit einem Garraum;
eine Tür zum wahlweisen Öffnen und Schließen des Garraums;
mindestens eine Wärmequelle, die Wärme zum Erwärmen eines Kochziels in dem Garraum bereitstellt; und
eine Beschichtungsschicht, die aus einer Emaillezusammensetzung nach einem der Ansprüche 1 bis 4 gebildet ist und auf eine innere Oberfläche des Hohlraums, eine innere Oberfläche der Tür und eine innere Oberfläche eines Türglases, das sich an der Tür befindet, aufgetragen ist.

10. Ein Kochgerät, umfassend:
eine Glasplatte;
mindestens eine Wärmequelle, die unter der Glasplatte angeordnet ist; und
eine Beschichtungsschicht, die auf eine obere Oberfläche der Glasplatte aufgetragen ist und
aus der Emaillezusammensetzung nach einem der Ansprüche 1 bis 4 gebildet ist.

## Revendications

1. Composition d'émail comprenant :
une fritte de verre ;
un composé à base de siloxane ;
un composé à base de silane ; et
un additif de broyage comprenant un ou plusieurs choisis dans le groupe constitué par SiO₂, Al₂O₃, ZrO₂ et TiO₂ ;
laquelle composition d'émail comprend :
85 à 99,75 % en poids de la fritte de verre ;
0,1 à 2,5 % en poids du composé à base de siloxane ;
0,05 à 2,5 % en poids du composé à base de silane ; et
0,1 à 10 % en poids de l'additif de broyage ; et
dans laquelle la fritte de verre comprend :
13,5 à 17 % en poids de P₂O₅ ;
30,3 à 37,6 % en poids de SiO₂ ;
3,8 à 13 % en poids d'Al₂O₃ ;
0,8 à 4,1 % en poids de ZrO₂ ;
7,8 à 14,5 % en poids de Na₂O;
2,3 à 4,5 % en poids de K₂O ;
0,4 à 1,6 % en poids de Li₂O;
14,1 à 19,6 % en poids de B₂O₃ ;
0,1 à 0,6 % en poids de TiO₂ ;
1,8 à 6,9 % en poids de NaF ;
0,8 à 1,2 % en poids de CoO ;
0,1 à 0,6 % en poids de MnO₂ ;
0,3 à 1,4 % en poids de NiO ;
0,1 à 4,3 % en poids de Fe₂O₃ ; et
0,5 à 7,5 % en poids d'un ou plusieurs parmi CaO et MgO, pour 100 % en poids de la fritte de verre.

2. Composition d'émail selon la revendication 1, dans laquelle l'additif de broyage a une granulométrie de 50 à 100 µm.

3. Composition d'émail selon la revendication 1 ou 2, dans laquelle le composé à base de siloxane comprend du polyméthylhydrosiloxane ou du polydiméthylsiloxane.

4. Composition d'émail selon l'une quelconque des revendications 1 à 3, dans laquelle le composé à base de silane comprend un aminosilane.

5. Méthode de préparation d'une composition d'émail, comprenant :
la préparation et la fusion d'un matériau de fritte de verre ;
le refroidissement du matériau et la préparation d'une fritte de verre ;
l'addition d'un additif de broyage comprenant un ou plusieurs choisis dans le groupe constitué par SiO₂, Al₂O₃, ZrO₂ et TiO₂, d'un composé à base de siloxane, et d'un composé à base de silane, à la fritte de verre, et la préparation d'un mélange ; et
l'agitation et le broyage du mélange ;
dans laquelle le mélange comprend :
85 à 99,75 % en poids de la fritte de verre ;
0,1 à 2,5 % en poids du composé à base de siloxane ;
0,05 à 2,5 % en poids du composé à base de silane ; et
0,1 à 10 % en poids de l'additif de broyage ; et
dans laquelle le matériau de fritte de verre comprend :
13,5 à 17 % en poids de P₂O₅ ;
30,3 à 37,6 % en poids de SiO₂ ;
3,8 à 13 % en poids d'Al₂O₃ ;
0,8 à 4,1 % en poids de ZrO₂ ;
7,8 à 14,5 % en poids de Na₂O;
2,3 à 4,5 % en poids de K₂O ;
0,4 à 1,6 % en poids de Li₂O;
14,1 à 19,6 % en poids de B₂O₃ ;
0,1 à 0,6 % en poids de TiO₂ ;
1,8 à 6,9 % en poids de NaF ;
0,8 à 1,2 % en poids de CoO ;
0,1 à 0,6 % en poids de MnO₂ ;
0,3 à 1,4 % en poids de NiO ;
0,1 à 4,3 % en poids de Fe₂O₃ ; et
0,5 à 7,5 % en poids d'un ou plusieurs parmi CaO et MgO, pour 100 % en poids de la fritte de verre.

6. Méthode de préparation selon la revendication 5, dans laquelle l'additif de broyage a une granulométrie de 50 à 100 µm.

7. Méthode de préparation selon la revendication 5 ou 6, dans laquelle le composé à base de siloxane comprend du polyméthylhydrosiloxane ou du polydiméthylsiloxane.

8. Méthode de préparation selon l'une quelconque des revendications 5 à 7, dans laquelle le composé à base de silane comprend un aminosilane.

9. Appareil de cuisson comprenant :
une cavité ayant un espace de cuisson ;
une porte ouvrant et fermant sélectivement l'espace de cuisson ;
au moins une source de chaleur fournissant de la chaleur pour chauffer une cible de cuisson dans l'espace de cuisson ; et
une couche de revêtement qui est formée d'une composition d'émail de l'une quelconque des revendications 1 à 4 et déposée sous forme de revêtement sur l'une parmi la surface intérieure de la cavité, la surface intérieure de la porte, et la surface intérieure d'une vitre de porte disposée au niveau de la porte.

10. Appareil de cuisson comprenant :
une plaque de verre ;
au moins une source de chaleur disposée sous la plaque de verre ; et
une couche de revêtement déposée sous forme de revêtement sur la surface supérieure de la plaque de verre et formée de la composition d'émail de l'une quelconque des revendications 1 à 4.
